# EUROPEAN PATENT SPECIFICATION

(11) **EP 3 729 898 B1**
(45) Date of publication and mention of the grant of the patent: **13.03.2024**
(21) Application number: 18892806.3
(22) Date of filing: 17.12.2018
(51) Int. Cl.: H04L 5/00

(54) **MANAGING PDCCH BLIND SEARCHES IN NEW RADIO UNLICENSED BAND SCENARIO**
VERWALTUNG VON BLINDEN PDCCH-SUCHEN IN EINEM UNLIZENZIERTEN BANDSZENARIO IN NEW RADIO
GESTION DE RECHERCHES AVEUGLES DE PDCCH DANS UN NOUVEAU SCÉNARIO DE BANDE SANS LICENCE RADIO

(30) Priority: 22.12.2017 US 201762609381 P
(43) Date of publication of application: 28.10.2020
(73) Proprietor: Nokia Technologies Oy, 02610 Espoo (FI)
(72) Inventor: TIIROLA, Esa, 90450 Kempele (FI); HOOLI, Kari Juhani, 90450 Oulu (FI)
(74) Representative: Script IP Limited
(86) International application number: PCT/FI2018/050932
(87) International publication number: WO 2019/122518

(56) References cited:
- WO-A1-2017/099526
- US-A1- 2017 290 008
- NOKIA ET AL: "On the mini-slot design in NR", 3GPP DRAFT; R1-1701052_MINISLOT_DESIGN_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051208567, Retrieved from the Internet: URL:http://www.3gpp.org/ftp/Meetings_3GPP_ SYNC/RAN1/Docs/ [retrieved on 2017-01-16]
- CONVIDA WIRELESS: "Control Channel Design with Mini-slot", 3GPP DRAFT; R1-1701140_CONTROL_CHANNEL_DESIGN_MINI_SLO T, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051208654, Retrieved from the Internet: URL:http://www.3gpp.org/ftp/Meetings_3GPP_ SYNC/RAN1/Docs/ [retrieved on 2017-01-16]
- ZTE: "PDCCH monitoring for slots and mini-slots (R1-1707162", 3GPP TSG RAN WG1 Meeting #89, May 2017 (2017-05), XP051272377, Hangzhou, P.R. China Retrieved from the Internet: URL:http://www.3gpp.org/ftp/TSG_RAN/WG1_RL 1/TSGR1_89/Docs/R1-1707162.zip [retrieved on 2019-03-14]
- "On DL control channel monitoring (R1-1707381", 3GPP TSG RAN WG1 #89, May 2017 (2017-05), XP051272593, Hangzhou, P.R. China Retrieved from the Internet: URL:http://www.3gpp.org/ftp/TSG_RAN/WG1_RL 1/TSGR1_89/Docs/R1-1707381.zip [retrieved on 2019-03-15]
- 5G: Wikipedia, 17 December 2017 (2017-12-17), XP55620054, Retrieved from the Internet: URL:https://en.wikipedia.org/w/index.php?t itle=5G&oldid=815822122 [retrieved on 2019-03-15]

## Description

### TECHNICAL FIELD:

The teachings in accordance with the exemplary embodiments of this invention relate generally to Radio Standards including physical layer (PHY), Medium access control (MAC), Radio Link Control (RLC), Radio Resource Control (RRC), etc., and particularly, to downlink control channel transmission and reception.

### BACKGROUND:

PDCCH blind search may be arranged by means of parallel search spaces sets mapped to one or multiple control resource sets (CORESET). A search space set may cover multiple search spaces with different aggregation levels. During the PDCCH blind search, a user equipment (UE) may monitor predefined control channel elements (CCEs), aggregated CCEs and Downlink Control Information (DCI) sizes in predefined time instants. Search space sets may be linked with CORESETs. In 3rd Generation Partnership Project (3GPP) Release 15 (Rel-15), the max number of CORESETs configurable for a bandwidth part (BWP) in a cell for a UE is 3 and the max number of search space sets configurable for a BWP in a cell for a UE is 10, respectively.

CCEs are arranged within a predefined CORESET configured via higher layer signalling. Each CCE consists of 6 REGs (12 subcarrier, 1 OFDM symbol), and 1, 2 or 3 REG bundles. REG bundles are mapped into the CORESET either using interleaved or non-interleaved mapping.

In LTE LAA, two types of partial subframes are supported to efficiently occupy channel: 1) Partial starting subframe that allows eNB to start DL transmission also on slot boundary in addition to the subframe boundary. 2) Partial ending subframe similar to downlink pilot time slot (DwPTS) with a configurable duration that allows eNB to stop DL transmission also on other symbol boundaries than subframe boundary. In LTE LAA, common signalling indicates the type (normal or partial ending) subframe of current and the next subframe. Common signaling to indicate the type (normal or DwPTS-like) of the current and the next subframe is transmitted in every DL subframe. However, LTE LAA approach may engender problems such as: For eNB to use the possibility to start DL transmission also on slot boundary, eNB hardware may need to prepare two PDCCH and PDSCH versions (one with subframe duration and the other one with slot duration) leading to added eNB complexity. Further, common signalling may increase the overhead. Additionally, common signalling defined for LTE LAA may not be applicable as such for NR scenario based on mixture of slots and mini-slots. Mini-slot based scheduling may also be referred to as non-slot based scheduling. R1-1701052 ("On the mini-slot design in NR"; Spokane, USA, 2017-01-16) is a contribution relating to mini-slot design in new radio. According to the contribution, a series of proposals relating to mini-slot design are presented, aiming at a single mini-slot design scalable to any NR scenario and service, supporting mini-slot design with a variable length and a flexible starting position. Avoiding mini-slot allocations extending over the slot/subframe boundaries. Supporting mini-slot lengths of 1, 2 and 3 OFDM symbols. Supporting dynamic selection of mini-slot length via DCI signalling, including the selection between mini-slot and slot allocation. Configuring the mini-slot starting positions / DCI monitoring positions via dedicated higher layer signalling. Configuring mini-slot length semi-statically together with mini-slot starting positions / DCI monitoring occasions. The time scale for TDM switching between different numerologies should be multiples of slots/subframes, and not be related with mini-slots. The mini-slot design should strive to contain control information (DCI or UCI) at position(s) relative to the start of the mini-slot. FDM between control and data with mini-slots is to be supported. The resolution for HARQ/scheduling timing-related signaling should be in units of OFDM symbols and that mini-slots are to be supported in one link direction only.

Certain abbreviations that may be found in the description and/or in the Figures are herewith defined as follows:
- AL: aggregation level
- BD: Blind decoding
- BPL: Beam Pair Link
- BWP: Bandwidth part
- CA: Carrier aggregation
- CC: Component carrier
- CCE: Control channel element
- CE: Control Element
- CORESET: Control resource set
- COT: Channel occupancy time
- CSS: Common search space
- DAI: Downlink Assignment Index
- DCI: Downlink Control Information
- DL: Downlink
- DMRS: Demodulation Reference Signal
- DRX: Discontinued reception
- eMBB: enhanced mobile broad band
- gNB: 5G Enhanced Node B (Base station)
- HARQ: Hybrid Automatic Repeat Request
- LAA: Licensed assisted access
- LTE: long term evolution
- MAC: Medium access control
- MEC: multi-access edge computing
- MME: mobility management entity
- NACK: Negative acknowledgement
- NCE: network control element
- NR: New radio
- NR-PDCCH: New radio Physical Downlink Control Channel
- N/W: Network
- OFDM: Orthogonal Frequency Division Multiplexing
- PBCH: Physical Broadcast Channel
- PDCCH: Physical Downlink Control Channel
- PDSCH: Physical Downlink Shared Channel
- PUCCH: Physical Uplink Control Channel
- PUSCH: Physical Uplink Shared Channel
- QCL: Quasi Co-Location
- RE: Resource Element
- REG: Resource element group
- RF: Radio Frequency
- RNTI: Radio Network Temporary Identifier
- RRC: Radio Resource Control
- RS: Reference Signal
- RSRP: Reference Signal Received Power
- SS: Search space
- SSS: Search space set
- TRP: Transmission - reception point
- TXRU: Transceiver Unit
- UE: User Equipment
- UL: Uplink
- USS: User-specific search-space
- 5G: Fifth generation mobile communication system

### BRIEF DESCRIPTION OF THE DRAWINGS:

The foregoing and other aspects of embodiments of this invention are made more evident in the following Detailed Description, when read in conjunction with the attached Drawing Figures, wherein:
Fig. 1 is a block diagram of one possible and non-limiting example system in which the example embodiments may be practiced;
Fig. 2 shows an example illustration of interleaved REG-to-CCE mapping, REG bundle size = 2;
Fig. 3 shows an example table of supported PDCCH mapping options;
Fig. 4 shows an example illustration of baseline solutions for Managing PDCCH blind Searches;
Fig. 5 shows an example illustration of PDCCH monitoring of an unlicensed band;
Fig. 6 shows an example illustration of PDCCH monitoring of an unlicensed band for mini-slot length = 2;
Fig. 7 shows an example illustration of PDCCH monitoring of an unlicensed band for mini-slot length = 7; and
Fig. 8 shows a method in accordance with example embodiments which may be performed by an apparatus.

### DETAILED DESCRIPTION:

The present invention is defined by the attached independent claims. Other preferred embodiments may be found in the dependent claims.

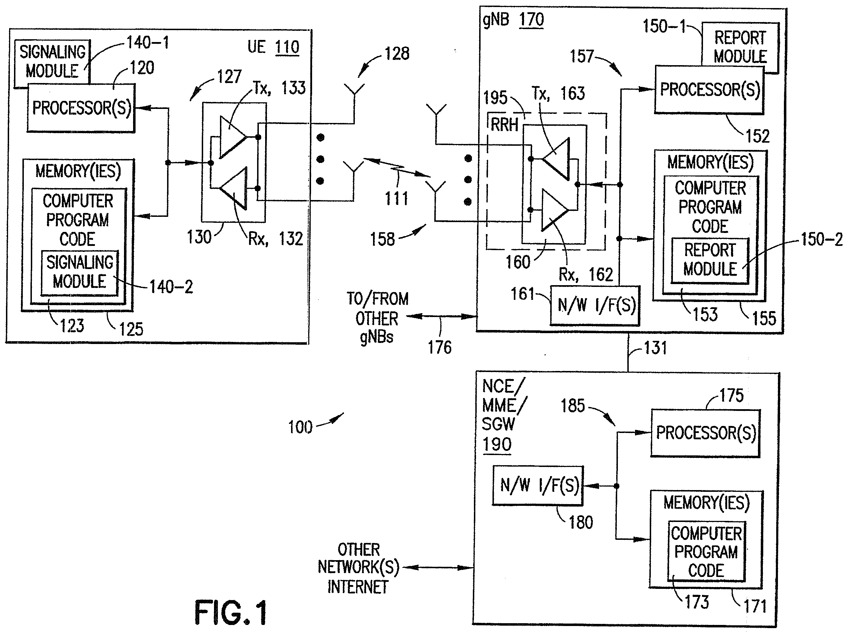

Turning to Fig. 1, this figure shows a block diagram of one possible and non-limiting example system in which the example embodiments may be practiced. In Fig. 1, a user equipment (UE) 110 is in wireless communication with a wireless network 100. A UE is a wireless, typically mobile device that can access a wireless network. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a signaling module 140, comprising one of or both parts 140-1 and/or 140-2, which may be implemented in a number of ways. The signaling module 140 may be implemented in hardware as signaling module 140-1, such as being implemented as part of the one or more processors 120. The signaling module 140-1 may be implemented also as an integrated circuit or through other hardware such as a programmable gate array. In another example, the signaling module 140 may be implemented as signaling module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with eNB 170 via a wireless link 111.

The gNB (NR/SG Node B but possibly an evolved NodeB) 170 is a base station (e.g., for LTE, long term evolution, or for NR, New Radio) that provides access by wireless devices such as the UE 110 to the wireless network 100. The gNB 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The gNB 170 includes a report module 150, comprising one of or both parts 150-1 and/or 150-2, which may be implemented in a number of ways. The report module 150 may be implemented in hardware as report module 150-1, such as being implemented as part of the one or more processors 152. The report module 150-1 may be implemented also as an integrated circuit or through other hardware such as a programmable gate array. In another example, the report module 150 may be implemented as report module 150-2, which is implemented as computer program code 153 and is executed by the one or more processors 152. For instance, the one or more memories 155 and the computer program code 153 are configured to, with the one or more processors 152, cause the gNB 170 to perform one or more of the operations as described herein. The one or more network interfaces 161 communicate over a network such as via the links 176 and 131. Two or more gNBs 170 communicate using, e.g., link 176. The link 176 may be wired or wireless or both and may implement, e.g., an X2 interface.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195, with the other elements of the gNB 170 being physically in a different location from the RRH, and the one or more buses 157 could be implemented in part as fiber optic cable to connect the other elements of the gNB 170 to the RRH 195.

It is noted that description herein indicates that "cells" perform functions, but it should be clear that the gNB that forms the cell will perform the functions. The cell makes up part of a gNB. That is, there can be multiple cells per gNB. Each cell may contain one or multiple transmission and receiving points (TRPs).

The wireless network 100 may include a network control element (NCE) 190 that may include MME (Mobility Management Entity)/SGW (Serving Gateway) functionality, and which provides connectivity with a further network, such as a telephone network and/or a data communications network (e.g., the Internet). The gNB 170 is coupled via a link 131 to the NCE 190. The link 131 may be implemented as, e.g., an S1 interface. The NCE 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the NCE 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, gNB 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Embodiments herein may be implemented in software (executed by one or more processors), hardware (e.g., an application specific integrated circuit), or a combination of software and hardware. In an example of an embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in Fig. 1. A computer-readable medium may comprise a computer-readable storage medium or other device that may be any media or means that can contain or store the instructions for use by or in connection with an instruction execution system, apparatus, or device, such as a computer.

The current architecture in LTE networks is fully distributed in the radio and fully centralized in the core network. The low latency requires bringing the content close to the radio which leads to local break out and multi-access edge computing (MEC). 5G may use edge cloud and local cloud architecture. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services and augmented reality. In radio communications, using edge cloud may mean node operations to be carried out, at least partly, in a server, host or node operationally coupled to a remote radio head or base station comprising radio parts. It is also possible that node operations will be distributed among a plurality of servers, nodes or hosts. It should also be understood that the distribution of labor between core network operations and base station operations may differ from that of the LTE or even be non-existent. Some other technology advancements probably to be used are Software-Defined Networking (SDN), Big Data, and all-IP, which may change the way networks are being constructed and managed.

Having thus introduced one suitable but non-limiting technical context for the practice of the example embodiments of this invention, the example embodiments will now be described with greater specificity.

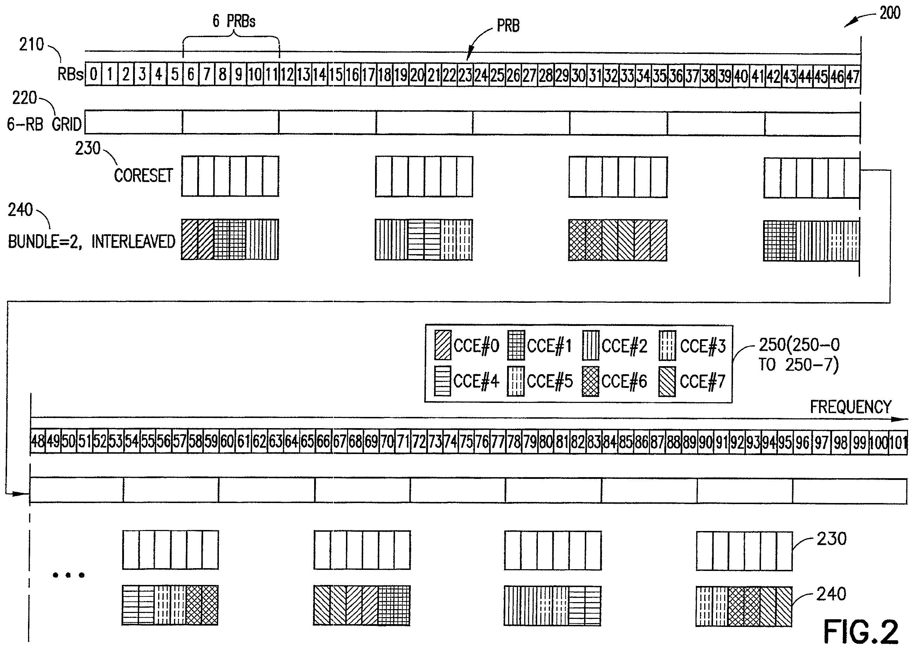

Fig. 2 illustrates an interleaved REG-to-CCE mapping 200, in which REG bundle size = 2. REG-to-CCE mapping 200 includes physical resource blocks (RBs or PRBs) 210, a 6 RB grid 220, CORESETs 230, interleaved REG Bundles 240 and a CCE key 250 (corresponding to CCEs 250-0 to 250-7).

As shown herein, the example embodiments may support monitoring of the downlink control channel in NR unlicensed band scenario. The example embodiments may support NR-based access to unlicensed spectrum.

As shown in Fig. 2, PDCCH blind search may be arranged by means of parallel search space sets mapped to one or multiple control resource sets (CORESET) 230. During the PDCCH blind search, UE 110 may monitor predefined control channel elements (CCEs), aggregated CCEs and DCI sizes in predefined time instants.

NR physical downlink control channel (PDCCH) may be used to convey downlink control information (DCI). NR PDCCH may utilize OFDM waveform and polar coding. NR PDCCH may utilize every fourth resource element for demodulation reference signal (DMRS). DCI can be used for downlink (DL) and uplink (UL) resource allocation signalling. DCI may be used also for other purposes, such as carrier aggregation and bandwidth part (BWP) (de)activation, frame structure indication (Group common PDCCH) and power control updates.

Certain embodiments are directed to the monitoring of the control channel in NR that may be carried out by means of blind searches. The UE 110 may perform blind decoding of PDCCH after FFT processing. Blind search or blind decoding may refer to the process by which a UE 110 finds its PDCCH by monitoring a set of PDCCH candidates in every monitoring occasion. A monitoring occasion can be once a slot, once per multiple slots or multiple times in a slot. In an embodiment, PDCCH blind search may be arranged by means of parallel search spaces or search space sets mapped to one or multiple control resource sets (CORESETs). During a PDCCH blind search, a UE 110 may be monitoring predefined control channel elements (CCEs), aggregated CCEs and/or DCI sizes in predefined time instants, corresponding to configured monitoring occasions.

Multiple PDCCHs may be transmitted in a single CORESET which may and may not be all relevant to a particular UE 110. The UE 110 may find the PDCCH specific to it by monitoring a set of PDCCH candidates (a set of consecutive CCEs 250 on which a PDCCH could be mapped) in every monitoring occasion. Monitoring occasions may be configured separately for each search space set.

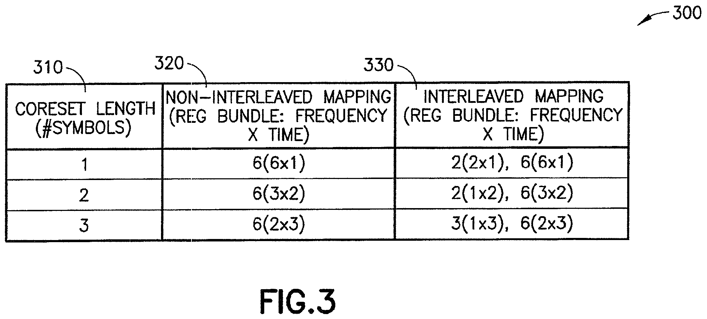

CCEs 250 may be arranged within a predefined CORESET configured via higher layer signalling. As shown CCEs 250 may include CCEs 250-0 to 250-7 (for example, CCE 250-0, CCE 250-1, CCE 250-2, etc.). Each CCE 250 consists of 6 REGs (for example, 12 subcarrier, 1 OFDM symbol), and 1, 2 or 3 REG bundles. REG bundles may be mapped into the CORESET either using interleaved or non-interleaved mapping. The UE 110 may assume that REG bundle defines the precoder granularity in frequency and time used by gNB 170 when transmitting PDCCH. Fig. 2 shows an example PDCCH mapping assuming 1 symbol CORESET, interleaved REG-to-CCE mapping and REG bundle size 2. The REG bundle sizes options supported by NR are listed in Table 300, shown in Fig. 3.

As shown in table 300, supported matching options may include CORESET length 310 (for example, a number (#) of symbols), and for each CORESET length, a corresponding non-interleaved mapping (REG bundle: frequency x time) 320 and interleaved mapping (REG bundle: frequency x time) 330. For example, as shown in Fig. 3, a CORESET length 310 of 1 has a corresponding non-interleaved mapping of 6(6x1) and interleaved mapping of 2(2x1), 6(6x).

Referring back to Fig. 2, the system may be implemented based on working assumptions and agreements made in the RAN1 working group (WG) meetings. In the case when only CORESET(s) for slot-based scheduling is configured for UE 110, the maximum number of PDCCH blind decodes per slot per carrier may be the variable X. The value of X may not exceed 44. The parameter X may vary according to scenario (for example, according to the subcarrier spacing and/or according to UE 110 capability). In a particular CORESET, two types of search spaces (for example, UE-common search space and UE-specific search space) may have different periodicities for a UE 110 to monitor.

A set of search spaces may be determined by one set of the following parameters: 1) A set of aggregation levels. 2) The number of PDCCH candidates for each aggregation level. 3) PDCCH monitoring occasion for the set of search spaces.

At least for cases other than initial access, to identify a set of search spaces, the following parameters may be configured by UE-specific RRC signaling. 1) The number of PDCCH candidates for each aggregation level of {1, 2, 4, 8, 16}. One value may be selected from {0, 1, 2, 3, 4, 5, 6, 8}. 2) PDCCH monitoring occasion for the set of search spaces. One value may be selected from {1-slot, 2-slot, 4-slot, 5-slot, 10-slot, 20-slot. 3) One or more value(s) may be selected from a plurality of symbols within a monitored slot, for example, 1^{st} symbol, 2^{nd} symbol, ... , 14^{th} symbol within a monitored slot. This may be done also by means of bitmap signalling. Each set of search spaces may associate with a CORESET configuration by RRC signaling.

System 100 may be implemented in a radio system, such as an NR system, which may support both slot based and non-slot (for example, in other words, mini-slot) based scheduling. A slot may be defined as a number of OFDM symbols, such as 14 OFDM symbols with normal CP. A slot may contain all downlink, all uplink, or at least one downlink part and at least one uplink part. Mini-slots are a subslot structure defined in 5G. Mini-slots consist of two or more symbols in which the first symbol includes (uplink or downlink) control information. Mini-slots may be used for operation in unlicensed bands, such as to begin transmission directly after a successful listen-before-talk procedure without waiting for the slot boundary.

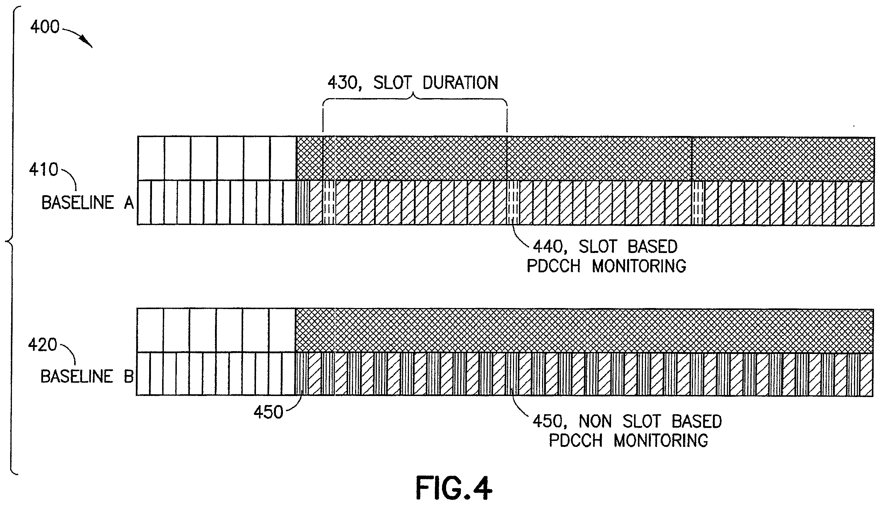

Referring to Fig. 4 an example an example illustration of a baseline solution 400 for Managing PDCCH blind Searches in New Radio Unlicensed band scenario is shown. The baseline solution 400 may comply with specifications provided in 3GPP NR Release 15 .

When NR is applied on unlicensed band requiring contention based channel access procedure, it is beneficial that gNB 170 or UE 110 may swiftly occupy a channel once the channel access procedure indicates the channel to be vacant. If gNB 170 or UE 110 waits for too long in self-deferral to align transmissions with slot boundary, more agile systems may occupy the channel in the meanwhile. Mini-slot presents an efficient way to reduce the time between the consecutive possible transmission starting positions. The example embodiments provide a (for example, configurable, reasonable, etc.) trade-off between the control channel decoding burden and frequency of transmission starting positions and allay some drawbacks of mini-slot, such as increased control channel blind decoding burden on the UE 110 side or higher demodulation reference signal overhead that arise from more frequent transmission starting positions. Furthermore, the number of BDs per slot may be limited. Hence, usage of mini-slot based PBDDH monitoring may reduce the number of BD candidates available per search space/CORESET.

As described above with respect to Fig. 2, and the agreements made in the RAN1 working group (WG) meetings (RAN1 #90), the UE 110 in NR systems may be configured to monitor a search space set associated to a DL control resource set (CORESET) with a particular periodicity. The UE 110 may be configured to monitor multiple such search space sets (associated to the same or different CORESETs), possibly configured with different periodicities, such as slot level periodicity (14 symbols) and mini-slot periodicity (2 symbols).

Referring back to Fig. 4, there is shown two baseline approaches (baseline A 410 and baseline B 420) for PDCCH monitoring in an unlicensed band scenario. The baseline solutions are based on NR phase 1.

Baseline A 410 illustrates an instance in which UE 110 may switch from mini-slot to slot-based monitoring at the boundary of the first full slot. As shown, baseline A 410 slot based PDCCH monitoring 440 used for depicts a slot duration 430. In some instances, issues may arise because the gNB 170 hardware may need to prepare two PDCCH and PDSCH versions (mini-slot and full slot) as the gNB 170 may need (for example, be required, instructed) to start the preparations before the channel access is obtained thereby leading to added gNB 170 complexity.

Baseline B 420 illustrates an instance in which UE 110 monitors PDCCH constantly according to mini-slot periodicity 450. As shown, baseline B depicts non-slot based PDCCH monitoring 450. In some instances, issues may arise because of excessive PDCCH monitoring overhead for UE 110 or if the number of BDs is limited, the gNB's 170 opportunities for sending PDCCH for certain UE 110 or a certain set of UEs 110 may be reduced considerably. This may be due to increase in the PDCCH blocking probability in the multi-user scenarios where gNB 170 needs to send PDCCH for multiple UEs 110 during the same slot. These instances may include also excessive PDCCH overhead (for example, for either or both of UE(s) 110 and gNB(s) 170).

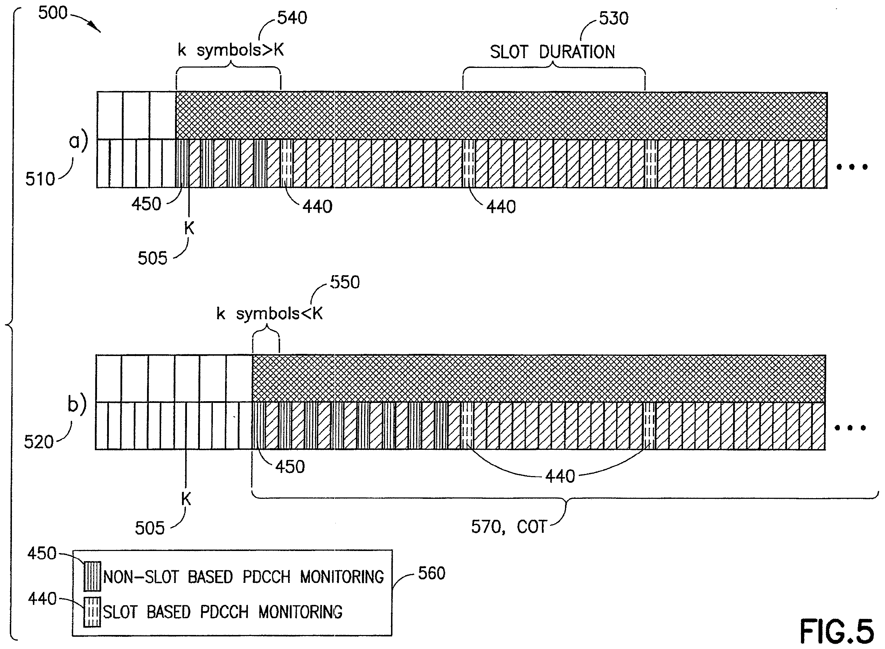

Fig. 5 shows an example illustration of COT (channel occupancy time) based PDCCH monitoring 500 of an unlicensed band. As shown in key 560, the slots may be monitored based on non-slot based PDCCH monitoring 570 or by slot based PDCCH monitoring 580.

Fig. 5 illustrates PDCCH monitoring in an unlicensed band scenario. In the example embodiment of COT based PDCCH monitoring, PDCCH monitoring during slot n may be based on mini-slot resolution. UE 110 may determine that a COT has started in slot n, and *k* OFDM symbols before the next slot boundary *(k* may have been determined also with respect to slot starting symbol). k is a starting symbol for a COT before the next slot boundary. Parameter n (not shown in Fig. 5) corresponds to the slot index where the COT starts. K can be seen as a threshold value for PDCCH transmission (from gNB 170 point of view) and PDCCH monitoring (from UE 110 point of view) controlling when to switch from mini-slot based operation to slot based operation. K may be determined, for example, in terms of OFDM symbols before the next slot boundary (K could have been determined also with respect to slot starting symbol). Parameter K may be configured by higher layer signalling.

It is also possible to predefine parameter K, or derive it implicitly from some another parameter. For example, N1 or N2 defined for certain UE 110 category may be seen as examples of such parameters. Parameter N1 illustrates the number of OFDM symbols required for UE processing from the end of NR-PDSCH reception to the earliest possible start of the corresponding ACK/NACK transmission from UE 110 perspective. N2 may be a similar parameter defining the minimum processing time for PUSCH scheduling and it may be counted from the end of NR-PDCCH reception to the earliest possible start of the corresponding PUSCH transmission from UE 110 perspective.

Once detecting the start position of the COT, the UE 110 may determine the symbol timing with respect to the slot structure, for example, based on the synchronisation signal block (SSB), including primary synchronization signal (PSS), secondary synchronization signal (SSS) and physical broadcast channel (PBCH). In the present context, start of COT means start of downlink transmission or start of downlink transmission burst. COT means the transmission duration, that is, the time that the transmission occupies the channel. Single COT may contain single transmission or both downlink and uplink transmission.

As shown in instance part a) 510 in Fig. 5, if k ≥ K (for example, shown in part a) of Fig. 5, 510 as k symbols > K, 540), PDCCH monitoring in slot n+1 and the following slots within the COT 570 may be based on slot resolution 440. Otherwise, PDCCH monitoring in slot n+1 may be based on mini-slot resolution 450 (for example, shown in part b) of Fig. 5, 520 as k symbols < K, 550). PDCCH monitoring in slot n+2 and the following slots within the COT may be based on slot resolution 440.

An example embodiment is shown in Fig. 5. In this example embodiment, it is assumed that K = 7 and k ≥ K (part a) of Fig. 5) or k<K (part b) of Fig. 5). Parameter K 505 may be a predefined parameter, or a parameter configured by RRC signalling. Parameter K 505 may also depend on the used numerology, the mini-slot length and/or monitoring periodicity defined for mini-slot based scheduling. In some instances, parameter K 505 may also be defined in terms of absolute time (for example, milliseconds).

The example embodiments provide an arrangement configured to allow gNB 170 to prepare mini-slot PDSCH packets in advance without determining (for example, calculating or receiving) the absolute starting time of the COT 570 (which may depend on the listen before talk procedure). The example embodiments may be beneficial from gNB 170 implementation point of view. On the other hand, the example embodiments may minimize (or substantially reduce) the unnecessary burden from mini-slot based PDCCH monitoring at UE 110. Furthermore, the example embodiments may minimize the control channel and DMRS overhead (which may be higher on mini-slot based operation than on slot based operation) while allowing flexible starting timing for COT 570. Furthermore, the example embodiments may reduce the PDCCH blocking probability in the multi-user scenarios where the number of BDs/slot and/or the UEs 110 channel estimation capability per slot determined, for example, in terms of the maximum number of CCEs per slot is limited to a predefined level.

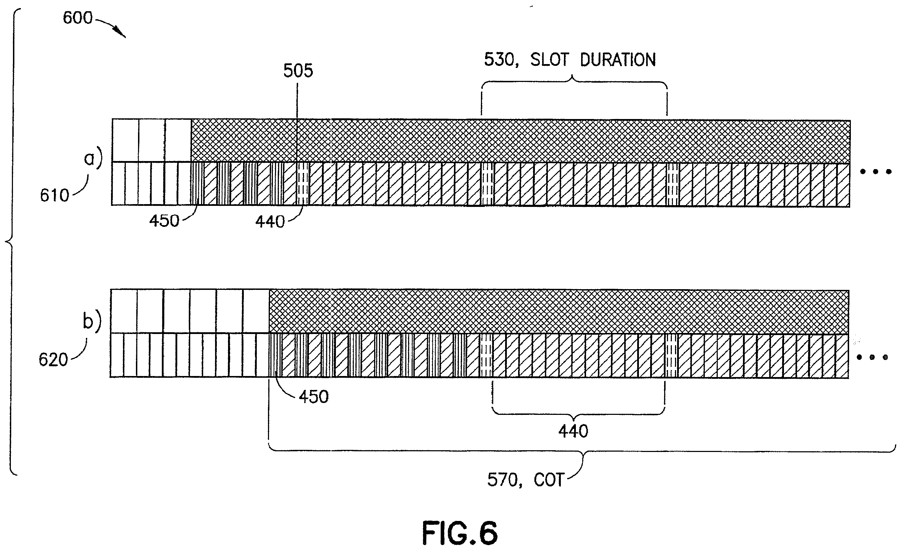

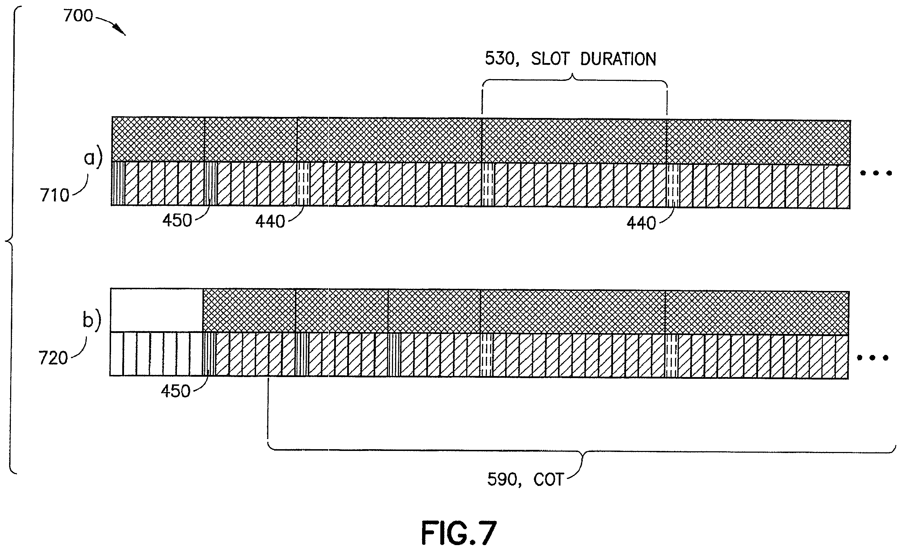

Figs. 6 and 7 show example illustrations of PDCCH monitoring of an unlicensed band with 2-symbol (Fig. 6) and 7-symbol (Fig. 7) mini-slots. According to an example embodiment, operation with 7-symbol mini-slots may be the preferred option due to lower PDCCH and DMRS overhead.

PDCCH monitoring may be configured using higher layer signalling. This may involve physical resources for CCEs (such as CORESET), DMRS parameters, QCL (Quasi-Co-Location) parameters. Additionally the configuration using higher layer signalling may involve search space set parameters, such as aggregation levels, DCI format(s), RNTIs, association between search space set and CORESET, etc. This may also include monitoring periodicity.

In an embodiment, PDCCH monitoring after initial access as well as when reading system information before initial access may be based on slot-based operation 440. Following this option, mini-slot based operation 450 (including COT based operation) may be configured by means of dedicated RRC signalling. PDCCH monitoring may be based on slot-based operation 440 also during the UE 110 DRX operation.

In another embodiment, mini-slot based operation 450 may be configured as part of UE-specific higher layer signalling (non-standalone unlicensed band operation) or using common higher layer signalling (such as PBCH and/or RMSI).

The UE 110 may determine the tentative COT 570 starting position based on DMRS in CORESET used to convey the DCI. PDCCH monitoring may be triggered based on DMRS detection. UE 110 may become fully aware of the COT 570 based on detected PDCCH.

With regard to error case handling, one of the potential issues related to the example embodiments is how to ensure that the UE 110 has correct information (for example, an understanding) on the COT 570 starting position (particularly as the COT 570 starting position impacts the PDCCH monitoring in subsequent slots(s)). The following error cases and consequences may be identified.

According to example embodiments, UE 110 may not receive (for example, the UE 110 may miss) PDCCHs at the beginning of COT 570. UE 110 may switch to slot based PDCCH monitoring one slot later than gNB 170. In instances in which the PDCCH search space for slot PDSCH is a sub-set of PDCCH search space for mini-slot PDSCH, the only consequence is that UE 110 may perform unnecessary mini-slot PDCCH monitoring for one slot. This effect of additional monitoring may produce a minor additional usage of resources (for example, a minor error case).

According to example embodiments, UE 110 may falsely detect presence of PDCCH when no PDCCH was transmitted. This may happen, for example, if PDCCH presence detection is based on, for example, single PDCCH DMRS detection. While a false detection of PDCCH is unlikely, this may lead to a situation where UE 110 switches too early to slot-based PDCCH monitoring and misses the possible PDCCHs with mini-slot DL assignment.

The system 100 may implement multiple solutions, which may complement each other, that may be used to mitigate the error cases. According to an example, the system 100 may define (for example, receive instructions and implement) a rule that if the UE 110 receives a slot based PDSCH scheduled at the beginning of slot, the UE 110 may assume (for example, implement one or more processes based on the assumption) that k≥K (in other words, the UE 110 may assume that one or more PDCCH at the beginning of COT were failed). This solution may be a partial solution as the solution does not address UEs 110 that are not scheduled on DL.

According to another example solution, the system 100 may determine the COT starting position based on downlink assignment index (DAI) bits included in DL grant. k may be determined based on DAI (in addition to detected starting position of COT This solution may be a partial solution as the solution does not address UEs that are not scheduled on DL.

According to another example solution, the system 100 may use a group common PDCCH. In this instance, group common PDCCH may contain information related to the COT starting position. For example, group common PDCCH may be scheduled on first PDCCH of slot and may contain indication whether slot-based or mini-slot based scheduling is used in the slot.

According to another example solution, the system 100 may use PDCCH DMRS detection. For example, after detecting PDCCH DMRS multiple times in consecutive slots, UE 110 may switch to slot-based operation in next slot or in current slot if the last detected PDCCH DMRS was at beginning of the slot. For example, 3xDMRS detection may be required for instances in which K=7.

According to example embodiment, in instances of intra-band carrier aggregation operation or operation of multiple simultaneous BW parts, the system 100 may determine when to apply PDCCH monitoring on slot resolution and when to apply PDCCH monitoring on mini-slot resolution on each of the component carriers. If all intra-band CCs are scheduled via single PDCCH, the operation may not differ from single carrier operation. In the case that UE 110 monitors multiple PDCCH carriers on a same band, UE 110 may switch to PDCCH monitoring on slot resolution once one of the PDCCH carriers is switching to PDCCH monitoring on slot resolution based on single carrier determination as described herein above. In instances gNB 170 starts transmission on one of the carriers, gNB 170 may not be expected to be able to progress the LBT on the other carriers on the same band. In these instances, transmission may start at the same time on all carriers and silent/non-transmitting carriers remain blocked for the duration of COT. gNB 170 may be assumed to have the same processing time limitations on all carriers on the same band.

Referring particularly to Fig. 6, there is shown an example PDCCH monitoring of an unlicensed band with 2-symbol mini-slots.

As shown in part a) of Fig. 6, in instances in which detection occurs a predetermined threshold before the start of the slot 505 (in other words, k≥K), the UE 110 may implement slot operation 440.

Referring particularly to Fig. 7, there is shown an example PDCCH monitoring of an unlicensed band with 7-symbol mini-slots.

Operation with 7-symbol mini-slots may be provide lower PDCCH and DMRS overhead compared to 2-symbol mini-slots.

Part a) of Fig. 6 and part a) of Fig. 7 illustrate a scenario in which k≥K. Part b) of Fig. 6 and part b) of Fig. 7 illustrate a scenario in which k<K.

Through implementation of the example embodiments, at the gNB 170, the gNB 170 may prepare DL packets in advance (without knowing the absolute starting timing of the COT).

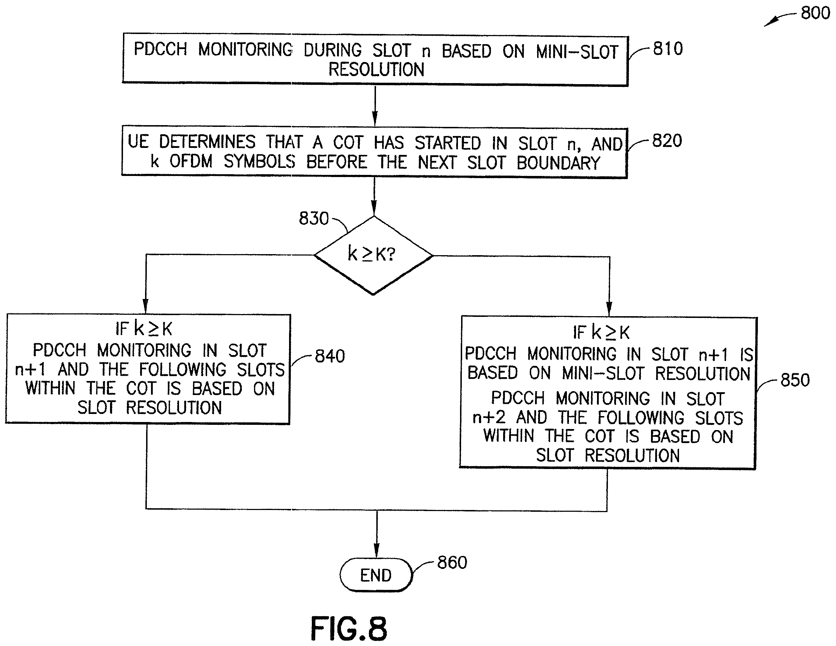

Fig. 8 is an example flow diagram 800 illustrating a process of PDCCH monitoring of an unlicensed band.

At block 810, UE 110 may perform PDCCH monitoring during a slot n (for example, a particular slot at which monitoring begins) based on mini-slot resolution 440.

At block 820, UE 110 may determine that a COT has started in slot n (for example, a particular slot), and k OFDM symbols before the next slot boundary.

At block 830, UE 110 may determine whether k ≥ K.

At block 840, if UE 110 determines that *k* ≥ *K,* UE 110 may perform PDCCH monitoring in slot n+1 and the following slots within the COT based on slot resolution 440.

At block 850, if UE 110 determines that *k* ≥ *K,* UE 110 may perform PDCCH monitoring in slot n+1 based on mini-slot resolution 450. UE 110 may perform PDCCH monitoring in slot n+2 and the following slots within the COT based on slot resolution 440.

At block 860, UE 110 may end the process of PDCCH monitoring.

Without in any way limiting the scope, interpretation, or application of the claims appearing below, a technical effect of one or more of the example embodiments disclosed herein is that a gNB may prepare DL packets in advance without knowing the absolute starting timing of the COT. Another technical effect is to provide a scalable solution for different gNB implementations (for example, K is a higher layer parameter that may be adjusted based on different gNB implementations). The example embodiments provide UE power savings. For example, unnecessary mini-slot based PDCCH monitoring may be avoided at the UE. Reduced control channel and DMRS overhead (unnecessary mini-slot based PDCCH and DMRS overhead may be avoided by use of the example embodiments. The example embodiments described herein may support CA and multiple BW parts.

An example embodiment may provide a method comprising performing, by at least one user device, Physical Downlink Control Channel (PDCCH) monitoring in an unlicensed band during a particular slot based on mini-slot resolution, determining that a channel occupancy time (COT) has started in the particular slot, and a first number of Orthogonal Frequency Division Multiplexing (OFDM) symbols before a next slot boundary; determining whether the first number of OFDM symbols exceeds a predetermined threshold and performing PDCCH monitoring for slots subsequent to the particular slot using at least one of slot resolution and mini-slot resolution based on the determination whether the first number of OFDM symbols exceeds the predetermined threshold.

In accordance with the example embodiments, wherein the particular slot is represented by a variable n, the predetermined threshold is represented by a variable K, and the first number of OFDM symbols by a variable k.

In accordance with the example embodiments, wherein performing PDCCH monitoring for the slots subsequent to the particular slot using at least one of slot resolution and mini-slot resolution based on the determination whether the first number of OFDM symbols exceeds the predetermined threshold further comprises, in response to a determination that k>K, performing PDCCH monitoring in a slot n+1 and following slots within the COT based on slot resolution.

In accordance with the example embodiments, wherein performing PDCCH monitoring for the slots subsequent to the particular slot using at least one of slot resolution and mini-slot resolution based on the determination whether the first number of OFDM symbols exceeds the predetermined threshold further comprises, in response to a determination that k>K, performing PDCCH monitoring in slot n+1 based on mini-slot resolution, and performing PDCCH monitoring in slot n+2 and following slots within the COT based on slot resolution.

In accordance with the example embodiments, receiving a slot based PDSCH scheduled at a beginning of slot; and, determining that k≥K, wherein the predetermined threshold is represented by a variable K, and the first number of OFDM symbols by a variable k.

In accordance with the example embodiments, determining a starting position for the COT based on at least one Downlink Assignment Index (DAI) bit included in a downlink (DL) grant.

In accordance with the example embodiments, using group common PDCCH, wherein the group common PDCCH contains information related to a starting position of the COT.

In accordance with the example embodiments, wherein the group common PDCCH is scheduled on a first PDCCH of slot and contains an indication that one of slot-based scheduling or mini-slot based scheduling is used in the slot.

In accordance with the example embodiments, detecting PDCCH DMRS a plurality of times in consecutive slots, and switching to slot- based operation in one of a next slot and a current slot if a last detected PDCCH Demodulation Reference Signal (DMRS) was at beginning of the current slot.

In accordance with the example embodiments, wherein the predetermined threshold is represented by a variable K and 3xDMRS detection is required for K=7.

In accordance with the example embodiments, scheduling all intra-band common carriers (CCs) via single PDCCH, wherein the scheduling is performed as a single carrier operation.

In accordance with the example embodiments, monitoring multiple PDCCH carriers on a same band, and switching to PDCCH monitoring on slot resolution if at least one of the PDCCH carriers is switching to PDCCH monitoring on slot resolution based on single carrier determination.

An example embodiment may be provided in an apparatus comprising at least one processor; and at least one non-transitory memory including computer program code, the at least one memory and the computer program code may be configured to, with the at least one processor, cause the apparatus to: perform Physical Downlink Control Channel (PDCCH) monitoring in an unlicensed band during a particular slot based on mini-slot resolution, determine that a channel occupancy time (COT) has started in the particular slot, and a first number of Orthogonal Frequency Division Multiplexing (OFDM) symbols before a next slot boundary, determine whether the first number of OFDM symbols exceeds a predetermined threshold; and perform PDCCH monitoring for slots subsequent to the particular slot using at least one of slot resolution and mini-slot resolution based on the determination whether the first number of OFDM symbols exceeds the predetermined threshold.

In accordance with the example embodiments, in response to a determination that k>K, perform PDCCH monitoring in a slot n+1 and following slots within the COT based on slot resolution.

In accordance with the example embodiments, in response to a determination that k<K, perform PDCCH monitoring in slot n+1 based on mini-slot resolution; and perform PDCCH monitoring in slot n+2 and following slots within the COT based on slot resolution.

In accordance with the example embodiments, receive a slot based PDSCH scheduled at a beginning of slot; and determine that k≥K, wherein the predetermined threshold is represented by a variable K, and the first number of OFDM symbols by a variable k.

In accordance with the example embodiments, determine a starting position for the COT based on at least one Downlink Assignment Index (DAI) bit included in a downlink (DL) grant.

In accordance with the example embodiments , use group common PDCCH, wherein the group common PDCCH contains information related to a starting position of the COT.

In accordance with the example embodiments, where the group common PDCCH is scheduled on a first PDCCH of slot and contains an indication that one of slot-based scheduling or mini-slot based scheduling is used in the slot.

In accordance with another example, an example apparatus comprises: means for performing, by at least one user device, Physical Downlink Control Channel (PDCCH) monitoring in an unlicensed band during a particular slot based on mini-slot resolution, means for determining that a channel occupancy time (COT) has started in the particular slot, and a first number of Orthogonal Frequency Division Multiplexing (OFDM) symbols before a next slot boundary; means for determining whether the first number of OFDM symbols exceeds a predetermined threshold and means for performing PDCCH monitoring for slots subsequent to the particular slot using at least one of slot resolution and mini-slot resolution based on the determination whether the first number of OFDM symbols exceeds the predetermined threshold.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in Fig. 1. A computer-readable medium may comprise a computer-readable storage medium (e.g., memories 125, 155, 171 or other device) that may be any media or means that can contain, store, and/or transport the instructions for use by or in connection with an instruction execution system, apparatus, or device, such as a computer. A computer-readable storage medium does not comprise propagating signals.

If desired, the different functions discussed herein may be performed in a different order and/or concurrently with each other. Furthermore, if desired, one or more of the above-described functions may be optional or may be combined.

Although various aspects are set out above, other aspects comprise other combinations of features from the described embodiments, and not solely the combinations described above.

It is also noted herein that while the above describes example embodiments, these descriptions should not be viewed in a limiting sense. Rather, there are several variations and modifications which may be made without departing from the scope of the present invention.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications which may be made without departing from the scope of the present invention as defined in the appended claims.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of example and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings ofthis invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. A method, comprising:
performing, by at least one user device (110), Physical Downlink Control Channel, PDCCH, monitoring (810) in an unlicensed band during a particular slot based on mini-slot resolution;
determining (820) that a downlink transmission has started in the particular slot, and a first number of transmitted Orthogonal Frequency Division Multiplexing, OFDM, symbols before a next slot boundary, wherein the particular slot is represented by a variable n, and the first number of OFDM symbols by a variable k;
determining (830) whether the first number of transmitted OFDM symbols exceeds a predetermined threshold, wherein the predetermined threshold is represented by a variable K, and
performing PDCCH monitoring (840, 850) for slots subsequent to the particular slot using at least one of slot resolution and mini-slot resolution based on the determination whether the first number of transmitted OFDM symbols exceeds the predetermined threshold, wherein, in response to a determination that k>K, performing PDCCH monitoring (840) in a slot n+1 and following slots within the downlink transmission based on slot resolution or, in response to a determination that k<K, performing PDCCH monitoring (850) in slot n+1 based on mini-slot resolution; and performing PDCCH monitoring (850) in slot n+2 and following slots within the downlink transmission based on slot resolution.

2. The method of claim 1, wherein a search space set defined for mini-slot based PDCCH monitoring and a search space set defined for slot based PDCCH monitoring utilizes a same Control resource set, CORESET.

3. The method of claim 1, further comprising:
receiving a slot based Physical Downlink Shared Channel, PDSCH, scheduled at a beginning of slot, wherein PDCCH monitoring for a next slot is based on slot resolution; and
determining that k≥K, wherein the predetermined threshold is represented by the variable K, and the first number of transmitted OFDM symbols by the variable k.

4. The method of claim 1, further comprising:
detecting PDCCH Demodulation Reference Signal, DMRS, a plurality of times in consecutive slots;
switching to slot-based operation in one of a next slot and a current slot if a last detected PDCCH DMRS was at beginning of the current slot.

5. The method of claim 4, wherein the predetermined threshold is represented by the variable K and 3xDMRS detection is required for K=7.

6. The method of claim 1, further comprising:
receiving resource allocations for all intra-band component carriers via a single PDCCH carrier, wherein the PDCCH monitoring is performed as a single carrier operation.

7. An apparatus (110), comprising means (120) arranged for:
performing Physical Downlink Control Channel, PDCCH, monitoring in an unlicensed band during a particular slot based on mini-slot resolution;
determining that a downlink transmission has started in the particular slot, and a first number of transmitted Orthogonal Frequency Division Multiplexing, OFDM, symbols before a next slot boundary, wherein the particular slot is represented by a variable n and the first number of OFDM symbols by a variable k;
determining whether the first number of transmitted OFDM symbols exceeds a predetermined threshold wherein the predetermined threshold is represented by a variable K, and
performing PDCCH monitoring for slots subsequent to the particular slot using at least one of slot resolution and mini-slot resolution based on the determination whether the first number of transmitted OFDM symbols exceeds the predetermined threshold, wherein, the means (120) are further arranged to, in response to a determination that k>K, perform PDCCH monitoring in a slot n+1 and following slots within the downlink transmission based on slot resolution or, in response to a determination that k<K, perform PDCCH monitoring in slot n+1 based on mini-slot resolution; and perform PDCCH monitoring in slot n+2 and following slots within the downlink transmission based on slot resolution.

8. The apparatus (110) of claim 7, where the means (120) are further arranged to, receive a slot based Physical Downlink Shared Channel, PDSCH, scheduled at a beginning of slot, wherein PDCCH monitoring for a next slot is based on slot resolution; and
determine that k≥K, wherein the predetermined threshold is represented by the variable K, and the first number of transmitted OFDM symbols by the variable k.

9. The apparatus (110) of claim 7, where the means (120) are further arranged to determine a starting position for the downlink transmission based on at least one Downlink Assignment Index, DAI, bit included in a downlink, DL, grant.

10. A non-transitory computer readable medium encoded with instructions that, when executed by a computer, cause performance of a method according to any of claims 1-6.

## Patentansprüche

1. Verfahren, das Folgendes umfasst:
Durchführen einer physischen Downlinksteuerkanal(PDCCH)-Überwachung (810) durch mindestens eine Benutzervorrichtung (110) in einem nicht lizenzierten Band während eines speziellen Schlitzes auf Basis einer Minischlitzauflösung;
Bestimmen (820), dass eine Downlinkübertragung im speziellen Schlitz gestartet wurde, und einer ersten Anzahl von übertragenen orthogonalen Frequenzmultiplexing(OFDM)-Symbolen vor einer nächsten Schlitzgrenze, wobei der spezielle Schlitz durch eine Variable n repräsentiert wird und die erste Anzahl von OFDM-Symbolen durch eine Variable k repräsentiert wird;
Bestimmen (830), ob die erste Anzahl von übertragenen OFDM-Symbolen einen vorbestimmten Schwellwert überschreitet, wobei der vorbestimmte Schwellwert durch eine Variable K repräsentiert wird, und
Durchführen einer PDCCH-Überwachung (840, 850) für Schlitze, die auf den speziellen Schlitz folgen, unter Verwendung von mindestens einem einer Schlitzauflösung und einer Minischlitzauflösung auf Basis der Bestimmung, ob die erste Anzahl von übertragenen OFDM-Symbolen den vorbestimmten Schwellwert überschreitet,
wobei in Reaktion auf eine Bestimmung, dass k>K, Durchführen einer PDCCH-Überwachung (840) in einem Schlitz n+1 und folgenden Schlitzen innerhalb der Downlinkübertragung auf Basis einer Schlitzauflösung oder in Reaktion auf eine Bestimmung, dass k<K, Durchführen einer PDCCH-Überwachung (850) in Schlitz n+1 auf Basis einer Minischlitzauflösung; und Durchführen einer PDCCH-Überwachung (850) in Schlitz n+2 und folgenden Schlitzen innerhalb der Downlinkübertragung auf Basis einer Schlitzauflösung.

2. Verfahren nach Anspruch 1, wobei ein Suchraumsatz, der für eine minischlitzbasierte PDCCH-Überwachung definiert ist, und ein Suchraumsatz, der für eine schlitzbasierte PDCCH-Überwachung definiert ist, einen selben Steuerressourcensatz, CORESET, nutzen.

3. Verfahren nach Anspruch 1, das ferner Folgendes umfasst:
Empfangen eines schlitzbasierten gemeinsam verwendeten physischen Kanals, PDSCH, das an einem Anfang eines Schlitzes geplant ist, wobei eine PDCCH-Überwachung für einen nächsten Schlitz auf einer Schlitzauflösung basiert; und
Bestimmen, dass k≥K, wobei der vorbestimmte Schwellwert durch die Variable K und die erste Anzahl von übertragenen OFDM-Symbolen durch die Variable k repräsentiert wird.

4. Verfahren nach Anspruch 1, das ferner Folgendes umfasst:
Detektieren eines PDCCH-Demodulationsreferenzsignals, DMRS, eine Vielzahl von Malen in aufeinanderfolgenden Schlitzen;
Umschalten auf einen schlitzbasierten Betrieb in einem von einem nächsten Schlitz und einem aktuellen Schlitz, wenn sich ein zuletzt detektiertes PDCCH DMRS am Anfang des aktuellen Schlitzes befand.

5. Verfahren nach Anspruch 4, wobei der vorbestimmte Schwellwert durch die Variable K repräsentiert wird und für K=7 eine 3xDMRS-Detektion erforderlich ist.

6. Verfahren nach Anspruch 1, das ferner Folgendes umfasst:
Empfangen von Ressourcenzuteilungen für alle Intrabandkomponententräger via einen einzelnen PDCCH-Träger, wobei die PDCCH-Überwachung als ein Einzelträgerbetrieb durchgeführt wird.

7. Einrichtung (110), die Mittel (120) umfasst, die zu Folgendem angeordnet sind:
Durchführen einer physischen Downlinksteuerkanal(PDCCH)-Überwachung in einem nicht lizenzierten Band während eines speziellen Schlitzes auf Basis einer Minischlitzauflösung;
Bestimmen, dass eine Downlinkübertragung im speziellen Schlitz gestartet wurde, und einer ersten Anzahl von übertragenen orthogonalen Frequenzmultiplexing(OFDM)-Symbolen vor einer nächsten Schlitzgrenze, wobei der spezielle Schlitz durch eine Variable n repräsentiert wird und die erste Anzahl von OFDM-Symbolen durch eine Variable k repräsentiert wird;
Bestimmen, ob die erste Anzahl von übertragenen OFDM-Symbolen einen vorbestimmten Schwellwert überschreitet, wobei der vorbestimmte Schwellwert durch eine Variable K repräsentiert wird, und
Durchführen einer PDCCH-Überwachung für Schlitze, die auf den speziellen Schlitz folgen, unter Verwendung von mindestens einem einer Schlitzauflösung und einer Minischlitzauflösung auf Basis der Bestimmung, ob die erste Anzahl von übertragenen OFDM-Symbolen den vorbestimmten Schwellwert überschreitet,
wobei die Mittel (120) in Reaktion auf eine Bestimmung, dass k>K, ferner angeordnet sind, eine PDCCH-Überwachung in einem Schlitz n+1 und folgenden Schlitzen innerhalb der Downlinkübertragung auf Basis einer Schlitzauflösung durchzuführen, oder in Reaktion auf eine Bestimmung, dass k<K, eine PDCCH-Überwachung in Schlitz n+1 auf Basis einer Minischlitzauflösung durchzuführen; und
Durchführen einer PDCCH-Überwachung in Schlitz n+2 und folgenden Schlitzen innerhalb der Downlinkübertragung auf Basis einer Schlitzauflösung.

8. Einrichtung (110) nach Anspruch 7, wobei die Mittel (120) ferner angeordnet sind, einen schlitzbasierten gemeinsam verwendeten physischen Downlinkkanal, PDSCH, zu empfangen, das an einem Anfang eines Schlitzes geplant ist, wobei eine PDCCH-Überwachung für einen nächsten Schlitz auf einer Schlitzauflösung basiert; und
Bestimmen, dass k≥K, wobei der vorbestimmte Schwellwert durch die Variable K und die erste Anzahl von übertragenen OFDM-Symbolen durch die Variable k repräsentiert wird.

9. Einrichtung (110) nach Anspruch 7, wo die Mittel (120) ferner angeordnet sind, auf Basis von mindestens einem Downlinkzuweisungsindex(DAI)-Bit, das in einer Downlink(DL)-Gewährung beinhaltet ist, eine Startposition für die Downlinkübertragung zu bestimmen.

10. Nichttransitorisches computerlesbares Medium, das mit Anweisungen codiert ist, die, wenn sie von einem Computer ausgeführt werden, die Durchführung eines Verfahrens gemäß einem der Ansprüche 1 bis 6 bewirken.

## Revendications

1. Procédé, comprenant les étapes suivantes :
effectuer, par au moins un dispositif utilisateur (110), une surveillance de canal physique de contrôle de liaison descendante, PDCCH, (810) dans une bande sans licence pendant un intervalle particulier sur la base d'une résolution de mini-intervalle ;
déterminer (820) qu'une transmission de liaison descendante a commencé dans l'intervalle particulier, et un premier nombre de symboles de multiplexage par répartition en fréquences orthogonales, OFDM, avant une limite de prochain intervalle, dans lequel l'intervalle particulier est représenté par une variable n, et le premier nombre de symboles OFDM est représenté par une variable k ;
déterminer (830) si le premier nombre de symboles OFDM transmis dépasse un seuil prédéterminé, dans lequel le seuil prédéterminé est représenté par une variable K, et
effectuer une surveillance PDCCH (840, 850) des intervalles ultérieurs à l'intervalle particulier en utilisant au moins une parmi une résolution d'intervalle et une résolution de mini-intervalle, en réponse à la détermination précisant si le premier nombre de symboles OFDM transmis dépasse le seuil prédéterminé, dans lequel
en réponse à la détermination selon laquelle k > K, effectuer une surveillance PDCCH (840) dans un intervalle n + 1 et les intervalles suivants dans la transmission de liaison descendante sur la base d'une résolution d'intervalle, ou en réponse à la détermination selon laquelle k < K, effectuer une surveillance PDCCH (850) dans l'intervalle n + 1 sur la base d'une résolution de mini-intervalle ; et
effectuer une surveillance PDCCH (850) dans l'intervalle n + 2 et les intervalles suivants dans la transmission de liaison descendante sur la base d'une résolution d'intervalle.

2. Procédé de la revendication 1, dans lequel un ensemble d'espace de recherche défini pour une surveillance PDCCH basée sur les mini-intervalles et un ensemble d'espace de recherche défini pour une surveillance PDCCH basée sur les intervalles utilisent un même ensemble de ressources de contrôle, CORESET.

3. Procédé de la revendication 1, comprenant en outre les étapes suivantes :
recevoir un canal physique partagé de liaison descendante, PDSCH, basé sur les intervalles, planifié au début d'un intervalle, dans lequel la surveillance PDCCH d'un prochain intervalle est basée sur une résolution d'intervalle ; et
déterminer que k > K, dans lequel le seuil prédéterminé est représenté par la variable K, et le premier nombre de symboles OFDM transmis est représenté par la variable k.

4. Procédé de la revendication 1, comprenant en outre les étapes suivantes :
détecter un signal de référence de démodulation PDCCH, DMRS, plusieurs fois à des intervalles consécutifs ;
passer à un fonctionnement basé sur les intervalles dans l'un parmi un prochain intervalle et un intervalle actuel si un dernier DMRS PDCCH détecté se trouvait au début de l'intervalle actuel.

5. Procédé de la revendication 4, dans lequel le seuil prédéterminé est représenté par la variable K et une détection 3xDMRS est requise pour K = 7.

6. Procédé de la revendication 1, comprenant en outre l'étape suivante :
recevoir des attributions de ressources pour toutes les porteuses de composantes intra-bande via une seule porteuse PDCCH, dans lequel la surveillance PDCCH est effectuée en tant qu'opération de porteuse unique.

7. Appareil (110), comprenant des moyens (120) conçus pour :
effectuer une surveillance de canal physique de contrôle de liaison descendante, PDCCH, dans une bande sans licence pendant un intervalle particulier sur la base d'une résolution de mini-intervalle ;
déterminer qu'une transmission de liaison descendante a commencé dans l'intervalle particulier, et un premier nombre de symboles de multiplexage par répartition en fréquences orthogonales, OFDM, avant une limite de prochain intervalle, dans lequel l'intervalle particulier est représenté par une variable n, et le premier nombre de symboles OFDM est représenté par une variable k ;
déterminer si le premier nombre de symboles OFDM transmis dépasse un seuil prédéterminé, dans lequel le seuil prédéterminé est représenté par une variable K, et
effectuer une surveillance PDCCH des intervalles ultérieurs à l'intervalle particulier en utilisant au moins une parmi une résolution d'intervalle et une résolution de mini-intervalle, en réponse à la détermination précisant si le premier nombre de symboles OFDM transmis dépasse le seuil prédéterminé, dans lequel
les moyens (120) sont en outre conçus pour, en réponse à la détermination selon laquelle k > K, effectuer une surveillance PDCCH dans un intervalle n + 1 et les intervalles suivants dans la transmission de liaison descendante sur la base d'une résolution d'intervalle, ou en réponse à la détermination selon laquelle k < K, effectuer une surveillance PDCCH dans l'intervalle n + 1 sur la base d'une résolution de mini-intervalle ; et
effectuer une surveillance PDCCH dans l'intervalle n + 2 et les intervalles suivants dans la transmission de liaison descendante sur la base d'une résolution d'intervalle.

8. Appareil (110) de la revendication 7, où les moyens (120) sont en outre conçus pour recevoir un canal physique partagé de liaison descendante, PDSCH, basé sur les intervalles, planifié au début d'un intervalle, dans lequel la surveillance PDCCH d'un prochain intervalle est basée sur une résolution d'intervalle ; et
déterminer que k > K, dans lequel le seuil prédéterminé est représenté par la variable K, et le premier nombre de symboles OFDM transmis est représenté par la variable k.

9. Appareil (110) de la revendication 7, où les moyens (120) sont en outre conçus pour déterminer une position de départ pour la transmission de liaison descendante sur la base d'au moins un bit d'indice d'affectation de liaison descendante, DAI, inclus dans un octroi de liaison descendante, DL.

10. Support non transitoire lisible par ordinateur codé avec des instructions qui, lorsqu'elles sont exécutées par un ordinateur, entraînent la réalisation d'un procédé selon l'une des revendications 1 à 6.
